# EUROPEAN PATENT SPECIFICATION

(11) **EP 1 421 549 B1**
(45) Date of publication and mention of the grant of the patent: **22.08.2007**
(21) Application number: 01967636.0
(22) Date of filing: 31.08.2001
(51) Int. Cl.: G06K 19/073, G06F 1/00

(54) **A PIN PAD**
EIN KARTENLESEGERÄT
CLAVIER D'IDENTIFICATION PERSONNELLE

(43) Date of publication of application: 26.05.2004
(73) Proprietor: VeriFone Systems Ireland Limited, Dublin 18 (IE)
(72) Inventor: MARTIN, Michael, Dublin 18 (IE); MEEHAN, Christopher Patrick, Dublin (IE); DOYLE, Rory, Cork (IE); JACKSON, Kevin, Dublin (IE); O'FLYNN, Brendan, Cork (IE); MADDEN, Chris, Dublin 18 (IE)
(74) Representative: Schütte, Gearoid
(86) International application number: PCT/IE2001/000113
(87) International publication number: WO 2003/019467

(56) References cited:
- DE-A- 4 312 905
- FR-A- 2 580 834
- FR-A- 2 764 403
- US-A- 6 002 343

## Description

### Introduction

The present invention relates to a tamper resistant module for a printed circuit board (PCB) having a connection layer and a component carrying layer and being for use in conjunction with a user operated input device of the type in which the PCB is protected by shielding from external physical attack and the PCB has input and output connections to the user device.

Further, the invention relates to a PIN pad of the type comprising a user operated input and display pad, a processing device comprising a multi- chip module, including RAM, containing applications whose security must be maintained from external attack, all on a printed circuit board and encapsulation material surrounding the multi-chip module, a communications interface connection between the display pad and the communication device.

PIN pads are used extensively for the input of information with point-of-sale terminals. Such point-of-sale terminals and PIN pads generally are subject to two forms of attack, namely, pure software attack and, more often, physical attack. Various methods are provided for having security of software whereby applications cannot be tampered with. However, one of the main problems is in relation to tamper resistant modules since the PIN pad contains or has mounted thereon electronics with security information. Any PIN pad comprises a keypad PCB and a secure PCB on which the processor memory chips, tamper detection circuits and memory deletion are mounted. Generally, a keypad board connecting the keypad contacts is attached to some form of housing. At present, one of the ways of protecting the security of such PCBs is to place a mesh around the whole board and then encapsulate the whole assembly with an epoxy resin. Such a tamper resistant module is not designed to be opened, rather entry is only possible by causing significant damage to the module. This is the effect of preventing any form of repair or replacement Generally such a tamper resistant module is connected to the keyboard by a ribbon cable and only input/output lines are connected to the mother board, thus there is no access to the data and address lines.

Penetration to the back of the tamper resistant module is conventionally protected by the wire mesh. The mesh consists of two distinct circuits so that breaking, shortening or cross connecting the wires will trigger an alarm. It is often a wire mesh when the two strands of wire have typically a diameter of the order of 0.15 mm and are usually knitted to form a tube. The tube is flattened and laid on top of the sensitive electronics and encapsulated with a suitable epoxy resin. In normal operation, the mesh circuits hold the output in a high state and once the mesh wire is broken or the two mesh circuits are shorted, the output goes low and an alarm condition is generated.

The placement of the mesh is unpredictable. Further, there is no identifiable path from outside the module to the sensitive electronics. It will be appreciated that the wires are virtually indistinguishable to an attacker who will run the risk of connecting two points from different circuits which in turn will lead to the deletion of the contents of the RAM. However, while relatively efficient, the use of the wire mesh in this manner, when knitted to form a tube, is not that satisfactory. They are difficult to manufacture and indeed there is a considerable failure rate of the tamper detectors during manufacture. They are also expensive and complex to produce.

German Patent Application No. DE 43 12 095 (D1) discloses a protective device for safeguarding stored data in card-reading devices against tampering and reading. The device comprises a protective foil, bearing conductive tracks on its surface. The protective device is manufactured flat and later folded in a specific manner, forming a housing that completely surrounds the electronic components of the card-reading device. The 'inside' surface of the protective device carries a plurality of serpentine conductive tracks and their associated contact points for connection to further contact points on the protective foil when folded or to contacts external to the foil, such as those associated with the electronic components of the card reading device.

The present invention is directed towards providing a tamper resistant module for such a printed circuit board and in particular to producing such a tamper resistant module for use in a PIN pad and also thus for producing and improving construction of PIN pad.

### Statements of Invention

According to the invention, there is provided a tamper resistant module of the type hereinbefore described in which the module comprises protection layers including a support layer of insulation material mounted against a layer of the PCB and carrying on the layer distal from a layer of the PCB a serpentine conductive track connected to a detection circuit on the PCB whereby breaking or earthing the track causes a fault condition to be signaled. The advantage of a serpentine track is that it is impossible for anybody to ascertain exactly where they can avoid causing a contact between two adjacent tracks.

In one embodiment of the invention, the module includes at least one additional serpentine conductive track insulated from the first track. Two additional tracks greatly increases the protection and further, additional tracks may be used.

In one embodiment of the invention, the tracks cross each other. In this way, it becomes even more difficult for somebody, even if they X-ray the protection layers, it will be still impossible to ascertain exactly which track they are dealing with.

Ideally, to cross each other one track is led through the support layer of insulation material across the other face of the support layer below the other track and back up through the support layer thus forming vias through the board.

Ideally, the serpentine track is connected through the support layer to the connection face of the PCB through a pair of vias and in which additional dummy vias between the serpentine track and the connection layer are also provided.

In another embodiment of the invention, the protection layers comprise an additional layer of insulation material carrying an earthed conductive shield as one layer thereof with its insulation layer against the serpentine conductive track. The great advantage of a conductive sleeve is that it makes the X-raying of the serpentine track all the more difficult, particularly when the conductive shield comprises a net-like arrangement of crossing tracks, the width of the tracks and the spacings therebetween being substantially equal.

Ideally, there are protection layers mounted on both sides of the PCB.

In another embodiment of the invention, a conductive edge protection track is led as a via up and down between the two layers of the PCB around the periphery thereof and connected to the detection circuit The advantage of this is that it prevents side attack on the board.

Ideally, the thickness of the protection track and the spacing between adjacent sides of the track as it is led through the PCB are substantially equal.

In one embodiment of the invention, there is at least one additional edge protection track inside the other track and offset laterally therefrom around the periphery of the board. In this way, effectively a total protection of the whole edge of the PCB is achieved.

Ideally, the thicknesses of the tracks are of the order of 10µm.

Additional connector pins connected to the earth are peripherally arranged around the PCB and protection layers to secure the layers together. This ensures further protection and rigidity for the PCB. ldeally, components mounted on the component carrying face of the PCB are encased in a hard epoxy resin which epoxy resin may be suitable HP4450 of Denter Hysol.

While mounting in hard epoxy resin is well known, it is still advantageous to do so even though it is extremely unlikely that the board could be attacked by way of an external attack.

When the PCB is mounted on a layer forming part of the user operated input device, the layer has I/O connectors on one face thereof for connection to corresponding I/O connections on the PCB and in which additional protection layers are mounted against the layer.

In this latter embodiment, the connections between the PCB and the mother board comprise peripherally arranged external I/O connections and internally arranged I/O connectors on the component carrying layers of the PCB, the connections additionally forming mounting legs for the PCB onto the layer. By doing this, it is possible to keep the more sensitive but still not extremely sensitive information carrying connectors protected. This is done by ensuring that the internal I/O connectors are connectors for the most sensitive information.

Some of these I/O connectors are connected to the detection circuit

In one embodiment of the invention, the connectors are formed from spheres of a solder material.

Further, the invention provides a PIN pad incorporating the module as described above in which the user operated input device includ es a display pad and the PCT comprises a multi-chip module including RAM containing applications, the security of which must be maintained from external attack and a communications interface between the display pad and a communications device. The fault condition can cause erasure of the RAM or the fault condition can simply cause an alarm signal to be transmitted to a central control station or can cause both erasure of the RAM and an alarm signal.

### Detailed Description of the Invention

The invention will be more clearly understood from the following description of an embodiment thereof, given by way of example only, with reference to the accompanying drawings, in which:-
Fig. 1 is a side view of a module according to the invention mounted on a mother board forming part of a keypad,
Fig. 2 is an plan view of the module,
Figs. 3(a) and (b) are exploded views of the module,
Fig. 4 is a photographic view of one part of a protection board,
Fig. 4a is an enlarged view of portion of Fig. 4,
Fig. 5 is a photographic view of another part of the protection board,
Fig. 5a is an enlarged view of portion of Fig. 5,
Fig. 6 is a photographic view of the connection face of a PCB,
Fig. 6a is an enlarged view of portion of Fig. 6,
Fig. 7 is a photographic view of a component carrying face of a PCB,
Fig. 7a is an enlarged view of portion of Fig. 7,
Fig. 7b is an enlarged view of another portion of Fig. 7,
Fig. 8 is a typical cross-sectional view of portion of the module and shown in Fig. 5a by the arrows VIII-VIII,
Fig. 9 is a sectional view along a line slightly in from the edge of the module and shown in Fig. 5a by the arrows IX-IX, and
Fig. 10 is a sectional view along a line somewhat further in from the edge of the module and shown in Fig. 5a by the arrows X-X.

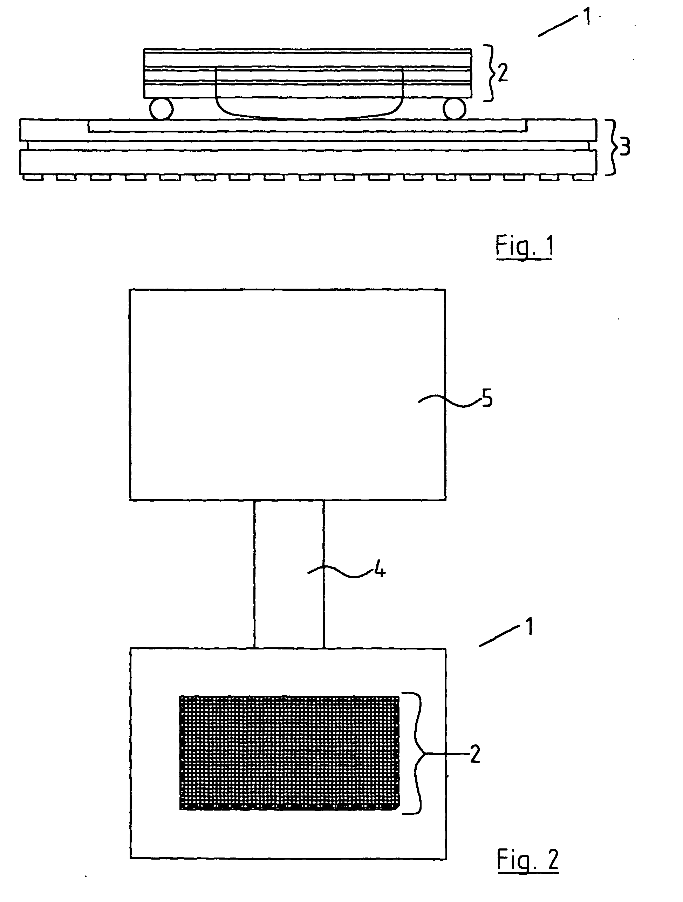

Referring to the drawings, and initially to Figs. 1 and 2, there is illustrated a PIN pad, indicated generally by the reference numeral 1 mounting a tamper resistant module, indicated generally by the reference numeral 2 on a keypad 3 which is connected by an interface cable 4 to a PIN pad mother board 5. A portion of the protection for the tamper resistant module 2 is mounted within the keypad 3. The tamper resistant module 2, which is essentially a multi-chip module as will be described here and after, controlling the display and all secure functions including the storing of all secure software on RAM. The tamper resistant module 2 will perform all terminal operations including encryption and decryption and the scanning of the keypad. Its principal function is to provide secure PIN entry interface between the display pad and a communications device. The principal function is secure PIN entry.

Fig. 2 is a plan view of the whole assembly. Strictly speaking the tamper proof module includes the keypad 3 as well.

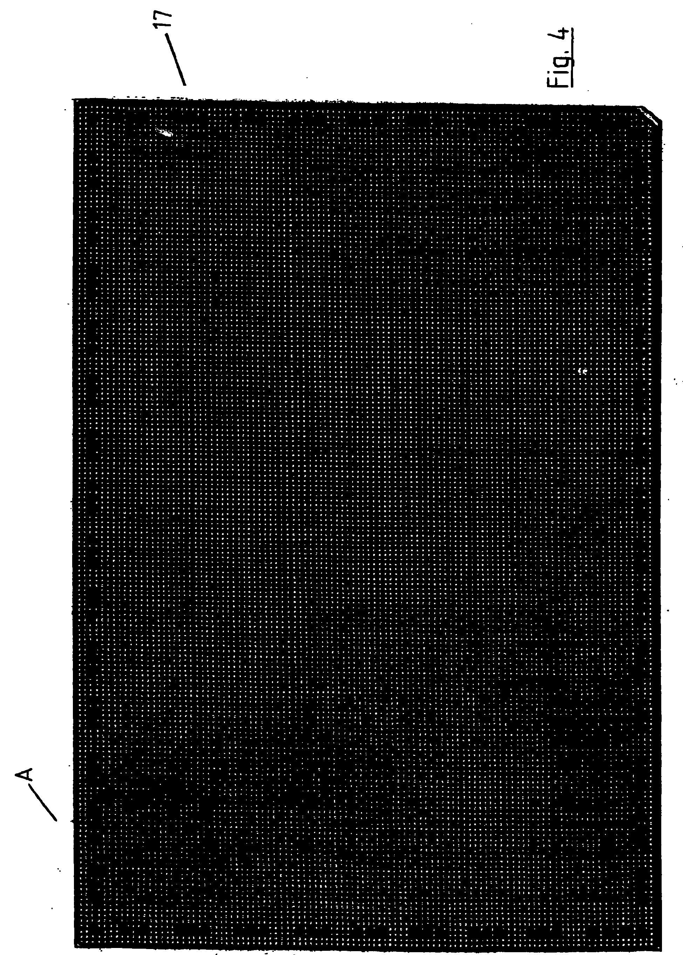

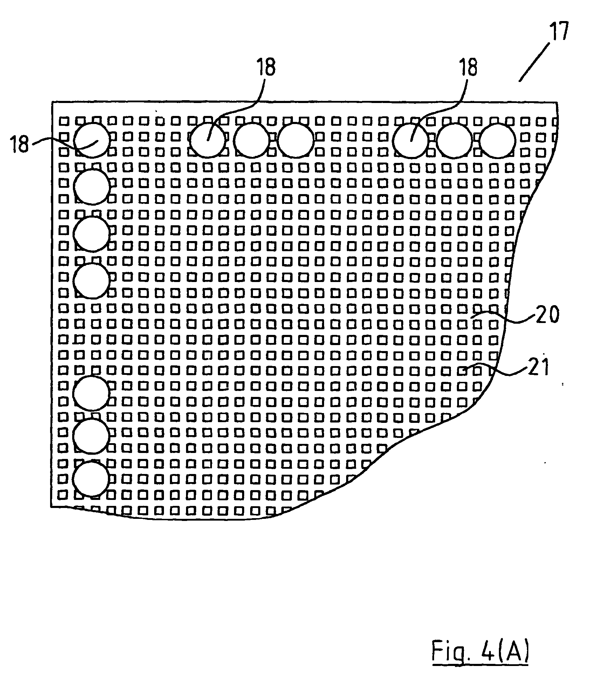

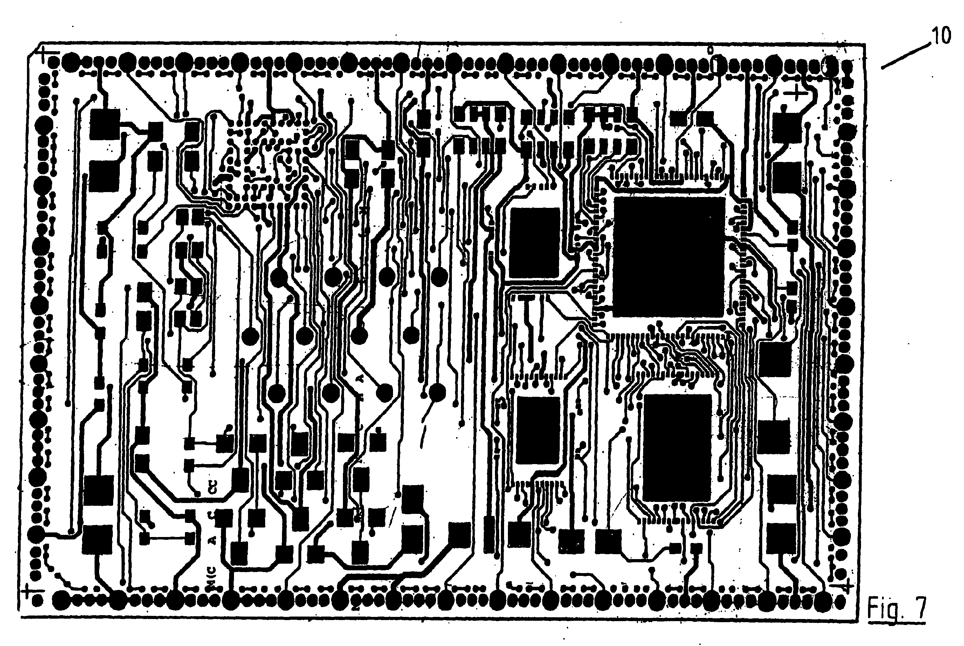

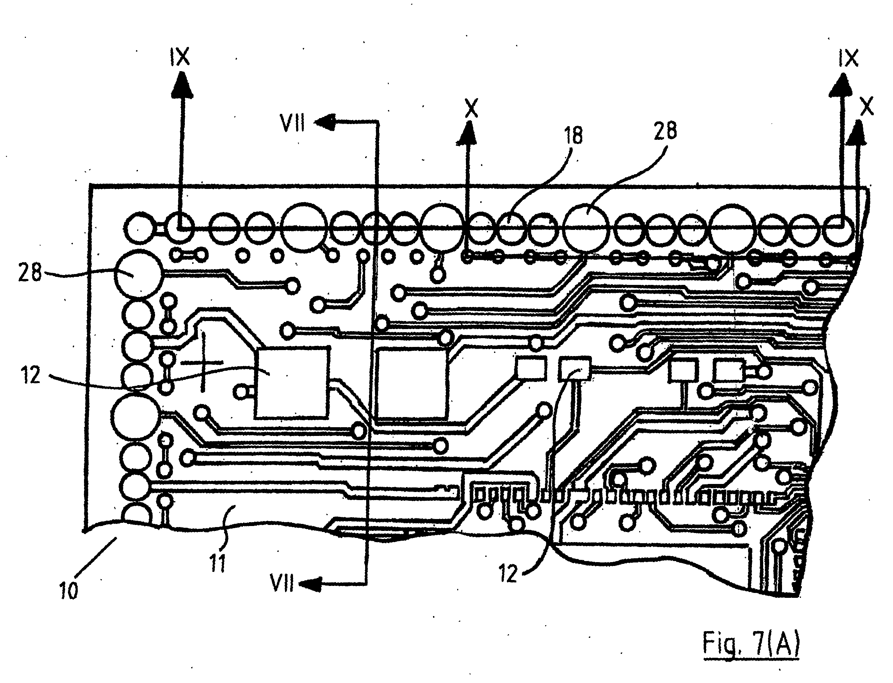

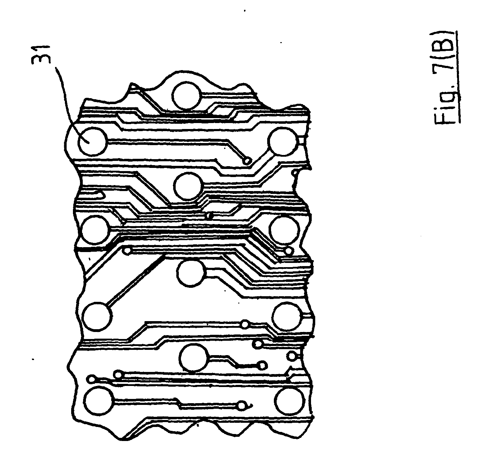

However, it is easier to describe it as being formed of a secure PCB module and one protection layer and ignore the fact that the keypad 3 incorporates a protection layer. Essentially, to be fully secure, it will be appreciated that the PCB requires protection on both faces so that it can be neither attacked from above or below and that further, it requires protection along all its edges so that it cannot suffer physical attack through any edge. There are, however, situations where one outside layer of a PCB might by the mode of mounting only one outside layer to be protected from attack. The following description is almost entirely referenced to protection of the connection layer of a PCB. The tamper resistant module 2 comprises a PCB 10 above which is mounted protection layers 15 comprising an inner board 16 and an outer layer 17. In this specification, since Figs. 4 to 7 inclusive are essentially photographic views, the minimum number of reference numerals is used on these figures. Thus, in each case, the same figure number with the subscript a, namely Fig. 4a to Fig. 7(a) and 7(b) inclusive, include the reference numerals.

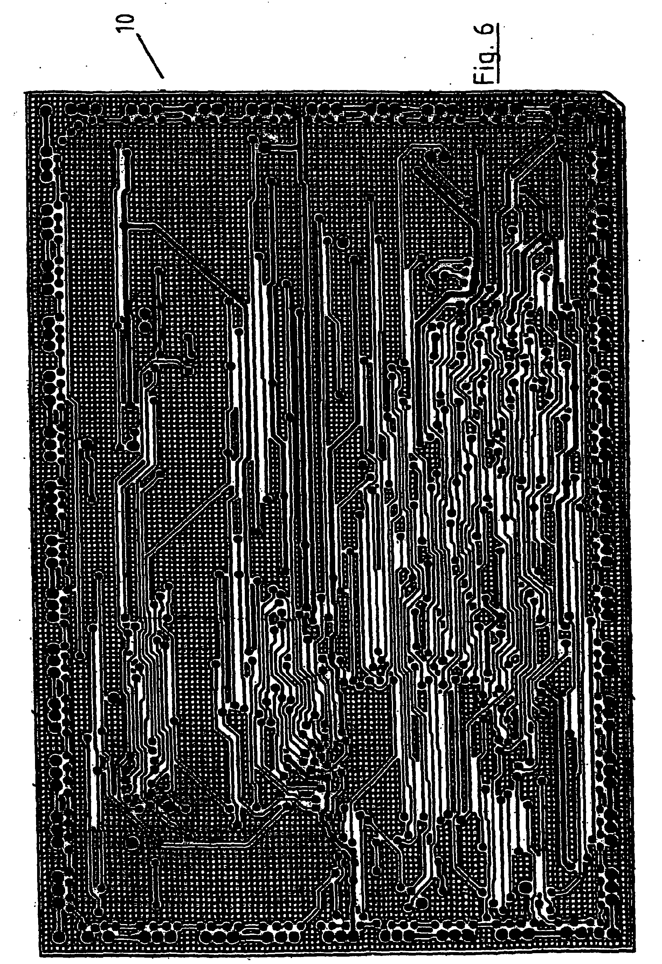

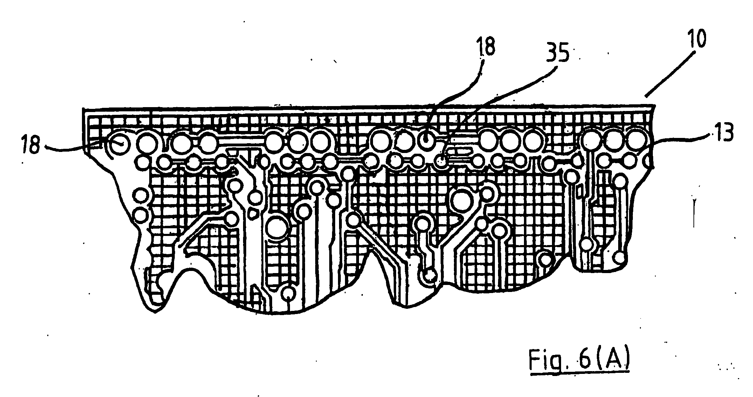

Referring to Figs. 6, 6a, 7 and 7(a), there is illustrated the PCB 10 having a component carrying layer 11 mounting components identified by the reference numeral 12 such as, for example, for the storage of RAM etc. which are not described in any more detail. There is also, for example, contained thereon a detection circuit, again not individually identified. The PCB 10 also has a connection layer 13 (see Fig. 6) on the other side of an insulation layer 14. Again, it has to be emphasized that the keypad 3 and interface cable 4 are simply connections from the PCB 10 to external services and that is all that is required here is actually a connection from the PCB 10.

Mounted on the connection face is the protection layer 15. These protection layers 15, as stated above, are effectively multi-layer protection layers 15, namely the inner layer 16 and the outer layer 17. The PCB 10, the inner layer 16 and an outer layer 17 are secured together by connector vias 18. The connector vias 18 may also project through into the other layers of the module 2 in the keypad side or may, as in this embodiment, be terminated at the PCB 10.

The outer layer 17 comprises, as can be seen from Figs. 4 and 4a, a layer formed from a net like structure of crossing earthed tracks 20 shown by the dark lines in the photograph having spaces 21 between them in which the width of the tracks 20 and the spacings 21 therebetween are substantially equal of the order 10µm or so. The tracks 20 are mounted on an insulating layer 22. The outer layer 17 form an earthed conductive shield and the layer instead of being of earthed tracks could be a sheet of metal. However, this could be susceptible to warping in use.

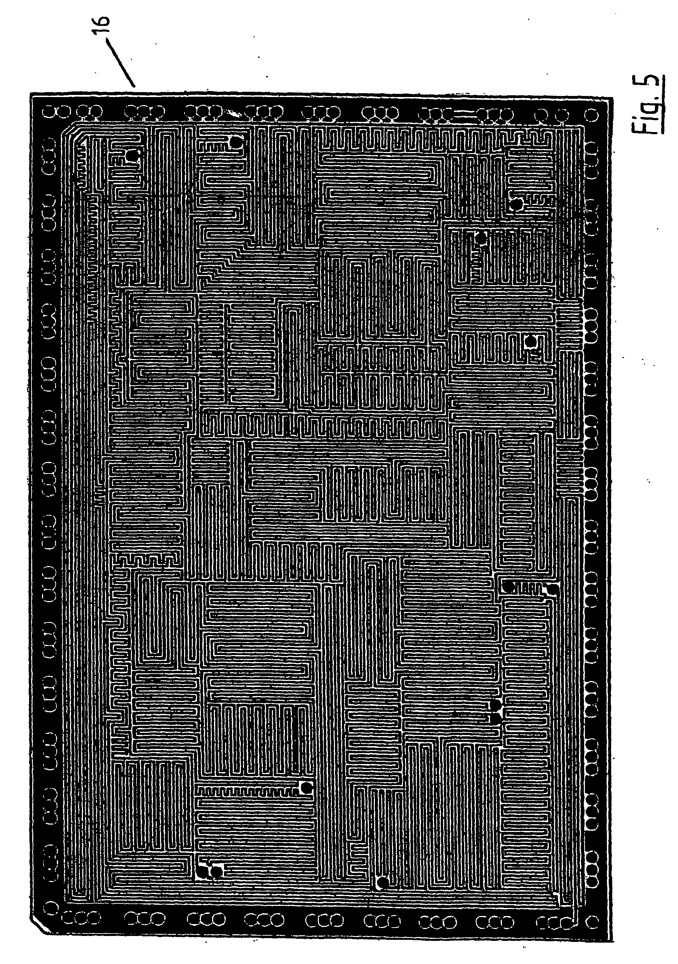

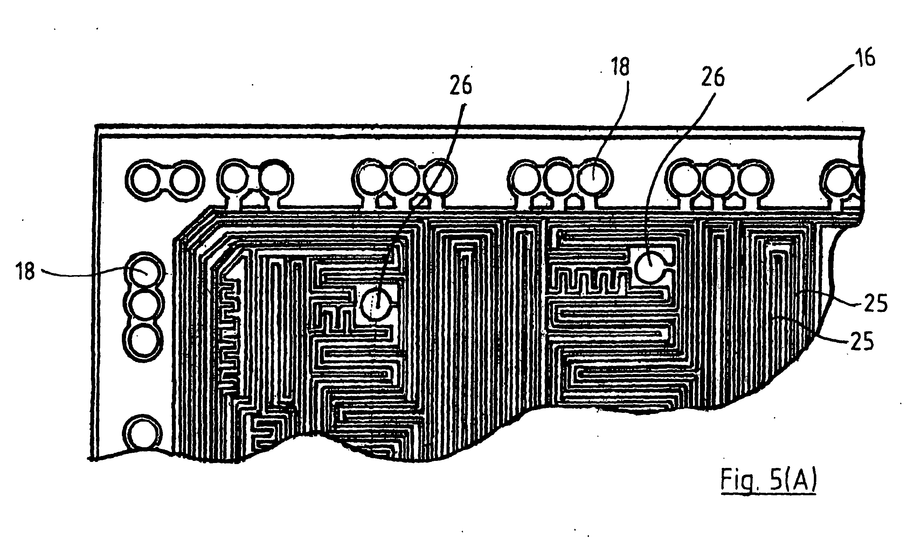

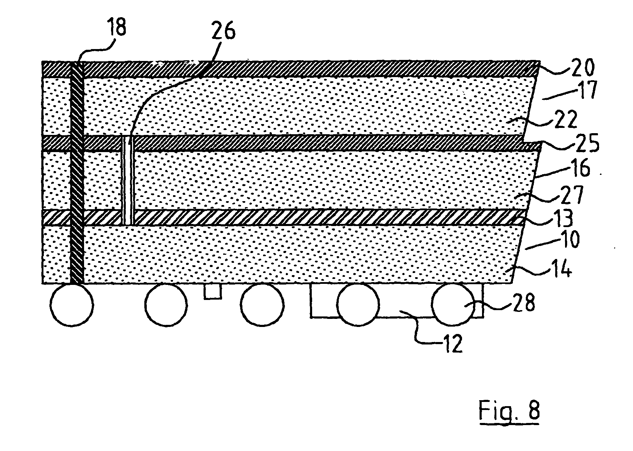

The inner layer 16 is shown in Figs. 5 and 5a, and again the connector vias 18 can be seen. In this case the inner layer 16 comprises two sets of electrically conductive tracks 25 which are deliberately arranged to form two serpentine conductive tracks each of which is connected to two of a plurality of internal vias 26 down through its insulation layer 27 to the connection face 13 of the PCB 10. Only two vias 26 are illustrated in Fig. 5a. The remainder of the vias 26 are effectively dummy vias to further prevent detection or track crossing vias. One of these vias 26, is illustrated in the sectional view in Fig. 8. It is simply a matter of choice for the designer which of the vias 26 is used for conduction, It will also be necessary to use some vias to allow a conductive track 25 to cross another conductive track 25. In this case the track will be led down through the insulation layer 27 across underneath the other conductive track 25, then up through another via 26 and then again across in serpentine fashion the inner layer 16. Each of the tracks 25 is connected to a detection circuit on the PCB 10.

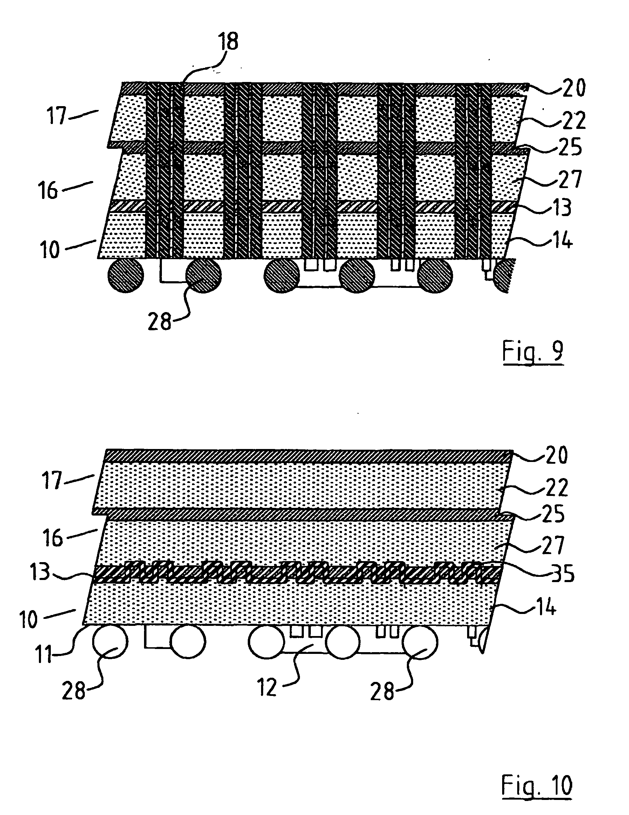

Referring again to the PCB 10, there is mounted around the periphery of the PCB 10 a plurality of I/O connectors 28, together with internal I/O connectors 31, all formed from spheres of solder material. It will be noted that the I/O connectors 28 are mounted between the connecting vias 18, as can be seen from Fig. 9. The position of the I/O connectors 31 are shown in Fig. 7(b) and can be easily seen in Fig. 7 where twelve dark circular shapes in three rows of four are positioned in the interior of the component carrying face.

Referring now to Fig. 10 and again to Figs. 6, 6a, 7 and 7a, there is illustrated a further conductive edge protection track 35 which is led as a via up and down between the two layers 11 and 13 of the PCB 10 around the periphery thereof. The protection track 35 is connected to the protection circuit. The spacing is again of the order of 10 µm.

One or more additional edge protection tracks may be provided and arranged one inside the other, i.e. spaced laterally from the edge of the PCB.

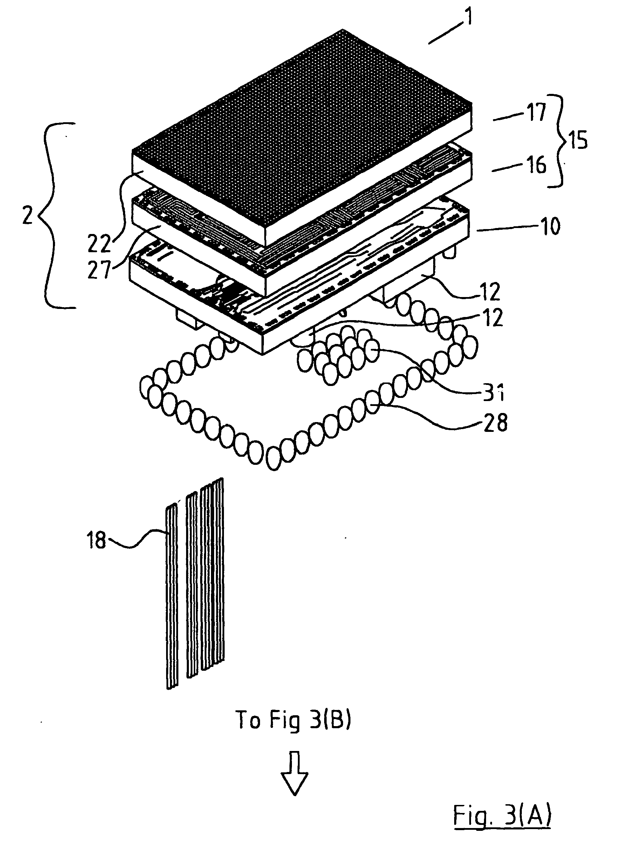

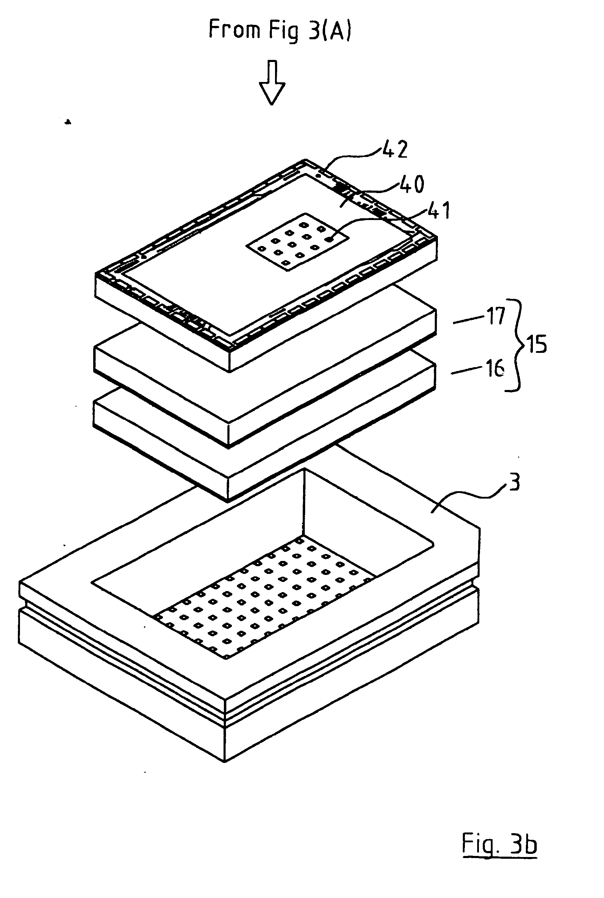

Referring to Fig. 3, it will be seen how the protection layers 15 are mounted against to protect the component carrying layer 11 of the PCB 10 from attack. A layer 40 of the keypad 3, the keys of which are not shown, mounts connectors 41 for connection to the I/O connections 31 and connectors 42 for connection to the I/O connectors 28. These in turn are connected to the keys of the keypad 3. The layer 40 forms part of the user operated input device.

In operation, if any attempt is made to drill through the protection layers 15, the drill will cause an alarm signal. The drill will almost certainly hit one of the serpentine tracks 25 causing a short or open circuit and thus a signal to the detection circuit which can be used to either send an alarm signal directly to the central control or usually to simply send a signal to delete the RAM. The grid or net like formation of the outer layer 17 ensures that it would be almost impossible to x-ray through the boards to pinpoint where one could drill through the serpentine tracks 25. Since the serpentine tracks 25 anyway are in the order of 100µm, it would be virtually impossible to use any form of conventional drilling and laser drilling would also be impossible due to the thickness of the module. Thus, drilling between both the tracks of the inner and outer boards would be virtually impossible. Side attack on the PCB is prevented by the conductive edge protection track 35.

It will be appreciated that the number of labyrinthine or serpentine tracks that may be provided is limitless. Preferably the various components 12 and indeed the whole of the components on the PCB board 10 can be encapsulated in a suitable hard epoxy resin impervious to chemical attack and x-ray such as, for example, that sold by Denter Hysol under the product number HP4450.

It will be appreciated that a PCB encased in two protection layers and manufactured in accordance with the invention is practically impervious to all external attack. While the present invention can be used for any form of PCB for its protection, it will be appreciated that it is particularly adapted for use with PCBs that have to be used in conjunction with PIN pads.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail within the scope of the claims.

## Claims

1. A tamper resistant module (2) for a printed circuit board (PCB) having a connection layer and a component carrying layer, and being for use in conjunction with a user operated input device of the type in which the PCB is protected by shielding from external physical attack and the PCB has input and output connections to the user device, the module (2) comprising
protection layers (15) including a support layer (16) of insulation material mounted against a layer (13) of the PCB and carrying on the layer 16 distal from a layer (11, 13) of the PCB (10) a serpentine conductive track (25) connected to a detection circuit on the PCB whereby breaking or earthing the track (25) causes a fault condition to be signaled, the module (2) including at least one additional serpentine conductive track (25) insulated from the first track (25), **characterized in that**
the tracks (25) cross each other.

2. A module as claimed in claim 1 in which to cross each other one track (25) is led through the support layer (16) of insulation material across the other face of the support layer (16) below the other track (25) and back up through the support layer (16) thus forming vias (26) through the board.

3. A module (2) as claimed in any preceding claim in which the serpentine track (25) is connected through the support layer (16) to the connection face of the PCB through a pair of vias (26) and in which additional dummy vias (26) between the serpentine track (25) and the connection layer (13) are also provided.

4. A module (2) as claimed in any preceding claim in which the protection layers (15) comprises an additional layer of insulation material (12) carrying an earthed conductive shield as one layer thereof with its insulation layer against the serpentine conductive track (25).

5. A module (2) as claimed in claim 4 in which the conductive shield comprises a net-like arrangement of crossing tracks (20), the width of the tracks (20) and the spacings (21) therebetween being substantially equal.

6. A module (2) as claimed in any preceding claim in which protection layers (15) are mounted on both sides of the PCB.

7. A module (2) as claimed in any preceding claim in which a conductive edge protection track (35) is led as a via (26) up and down between the two layers (11, 13) of the PCB around the periphery thereof and connected to the detection circuit.

8. A module (2) as claimed in claim 7 in which the thickness of the protection track (35) and the spacing between adjacent sides of the track (35) as it led through the PCB are substantially equal.

9. A module (2) as claimed in claim 7 or 8 in which there is at least one additional edge protection track (35) inside the other track (35) and offset laterally therefrom around the periphery of the board (10).

10. A module (2) as claimed in any preceding claim in which the thicknesses of the track are of the order of 100 µm.

11. A module (2) as claimed in any preceding claim in which additional connector pins connected to earth, are peripherally arranged around the PCB (10) and protection layers (15) to secure the layers (10, 15) together.

12. A module (2) as claimed in any preceding claim in which components (12) mounted on the component carrying face of the PCB are encased in a hard epoxy resin.

13. A module (2) as claimed in claim 12 in which the epoxy resin as HP4450 of Denter Hysol.

14. A module (2) as claimed in any preceding claim in which when the PCB (10) is mounted on a layer (40) forming part of the user operated input device, the layer has I/O connectors (41, 42) on one face thereof for connection to corresponding I/O connectors (28, 31) on the PCB (10) and in which additional protection layers (15) are mounted against the layer 40.

15. A module as claimed in claim 14 in which the connections between the PCB and the mother board comprise peripherally arranged external I/O connectors (28) and internally arranged I/O connectors (31) on the component carrying layer (11) face of the PCB (10), the connectors (28, 31) additionally forming mounting legs for the PCB onto the layer (40).

16. A module (12) as claimed in claim 15 in which the internal I/O connectors (31) are connectors for the most sensitive information.

17. A module (2) as claimed in any of claims 14 to 16 in which some of the I/O connectors (28, 31) are connected to the detection circuit.

18. A module (2) as claimed in any of claims 14 to 17 in which the I/O connectors (28, 31) are formed from spheres of a solder material.

19. A PIN pad (3) incorporating the module as claimed in any preceding claim in which the user operated input device includes a display pad and the PCB (10) comprises a multi-chip module including RAM containing applications the security of which must be maintained from external attack and a communications interface between the display pad and a communications device.

20. A PIN pad (3) as claimed in claim 19 in which the fault condition causes erasure of the RAM.

21. A PIN pad (3) as claimed in claim 19 or 20 in which the fault condition causes an alarm signal to be transmitted to a central control station.

## Patentansprüche

1. Eingriffssicheres Modul (2) für eine Leiterplatte (PCB) mit einer Verbindungsschicht und einer Komponententragschicht, das in Verbindung mit einem anwenderbedienten Eingabegerät des Typs eingesetzt wird, bei dem die PCB durch Abschirmen vor physischen Angriffen von außen geschützt ist und die PCB Ein- und Ausgangsverbindungen zum Benutzergerät hat, wobei das Modul (2) Folgendes umfasst:
Schutzschichten (15) einschließlich einer Auflageschicht (16) aus Isoliermaterial, die gegen eine Schicht (13) der Leiterplatte montiert ist und auf der Schicht (16) distal von einer Schicht (11, 13) der PCB (10) eine serpentinenförmige Leiterbahn (25) trägt, die mit einer Erfassungsschaltung auf der PCB verbunden ist, so dass eine Unterbrechung oder Erdung der Bahn (25) die Signalisierung eines Fehlerzustands verursacht, wobei das Modul (2) wenigstens eine zusätzliche serpentinenförmige Leiterbahn (25) aufweist, die von der ersten Bahn (25) isoliert ist, **dadurch gekennzeichnet, dass** die Bahnen (25) einander kreuzen.

2. Modul nach Anspruch 1, wobei zur Erzielung einer Überkreuzung eine Bahn (25) durch die Auflageschicht (16) aus Isoliermaterial über die andere Fläche der Auflageschicht (16) unter der anderen Bahn (25) und zurück durch die Auflageschicht (16) geführt wird, so dass Kontaktlöcher (26) durch die Platte entstehen.

3. Modul (2) nach einem der vorherigen Ansprüche, bei dem die serpentinenförmige Bahn (25) durch die Auflageschicht (16) mit der Verbindungsfläche der PCB durch ein Paar Kontaktlöcher (26) verbunden wird, und bei dem auch zusätzliche Dummy- Kontaktlöcher (26) zwischen der serpentinenförmigen Bahn (25) und der Verbindungsschicht (13) vorgesehen sind.

4. Modul (2) nach einem der vorherigen Ansprüche, bei dem die Schutzschichten (15) eine zusätzliche Schicht aus Isoliermaterial (12) umfassen, die eine geerdete leitende Abschirmung als eine Schicht davon mit ihrer Isolierschicht gegen die serpentinenförmige Leiterbahn (25) trägt.

5. Modul (2) nach Anspruch 4, bei dem die leitende Abschirmung eine netzartige Anordnung von sich kreuzenden Bahnen (20) umfasst, wobei die Breite der Bahnen (20) und die Abstände (21) dazwischen im Wesentlichen gleich sind.

6. Modul (2) nach einem der vorherigen Ansprüche, bei dem Schutzschichten (15) auf beiden Seiten der PCB montiert sind.

7. Modul (2) nach einem der vorherigen Ansprüche, bei dem eine leitende Randschutzbahn (35) als Kontaktloch (26) nach oben und unten zwischen den beiden Schichten (11, 13) der PCB um deren Peripherie geführt und mit der Erfassungsschaltung verbunden wird.

8. Modul (2) nach Anspruch 7, bei dem die Dicke der Schutzbahn (35) und der Abstand zwischen benachbarten Seiten der Bahn (35) bei deren Führung durch die PCB im Wesentlichen gleich sind.

9. Modul (2) nach Anspruch 7 oder 8, bei dem sich wenigstens eine zusätzliche Randschutzbahn (35) innerhalb der anderen Bahn (35) und lateral davon um die Peripherie der Platte (10) herum versetzt befindet.

10. Modul (2) nach einem der vorherigen Ansprüche, bei dem die Dicken der Bahn in der Größenordnung von 100 µm liegen.

11. Modul (2) nach einem der vorherigen Ansprüche, bei dem zusätzliche mit Erde verbundene Verbinderpins peripher um die PCB (10) und Schutzschichten (15) herum angeordnet sind, um die Schichten (10, 15) aneinander zu befestigen.

12. Modul (2) nach einem der vorherigen Ansprüche, bei dem auf der Komponententragfläche der PCB montierte Komponenten (12) in einem harten Epoxidharz eingeschlossen sind.

13. Modul (2) nach Anspruch 12, wobei der Epoxidharz HP4450 von Denter Hysol ist.

14. Modul (2) nach einem der vorherigen Ansprüche, wobei, wenn die PCB (10) auf einer Schicht (40) montiert ist, die Teil des anwenderbedienten Eingabegerätes bildet, die Schicht E/A-Verbinder (41, 42) auf einer Fläche davon für die Verbindung mit entsprechenden E/A-Verbindern (28, 31) auf der PCB (10) hat, und wobei zusätzliche Schutzschichten (15) gegen die Schicht (40) montiert sind.

15. Modul nach Anspruch 14, wobei die Verbindungen zwischen der PCB und der Mutterplatine peripher angeordnete externe E/A-Verbinder (28) und intern angeordnete E/A-Verbinder (31) auf der Fläche der Komponententragschicht (11) der PCB (10) umfassen, wobei die Verbinder (28, 31) zusätzlich Montagefüße für die PCB auf der Schicht (40) bilden.

16. Modul (12) nach Anspruch 15, wobei die internen E/A-Verbinder (31) Verbinder für die empfindlichsten Informationen sind.

17. Modul (2) nach einem der Ansprüche 14 bis 16, wobei einige der E/A-Verbinder (28, 31) mit der Erfassungsschaltung verbunden sind.

18. Modul (2) nach einem der Ansprüche 14 bis 17, bei dem die E/A-Verbinder (28, 31) von Sphären eines Lotmaterials gebildet sind.

19. PIN-Pad (3), die das Modul nach einem der vorherigen Ansprüche beinhaltet, wobei das anwenderbediente Eingabegerät ein Anzeigepad und die PCB (10) ein Multichip-Modul mit RAM umfasst, der Anwendungen enthält, deren Sicherheit vor Attacken von außen geschützt werden muss, und eine Kommunikationsschnittstelle zwischen dem Anzeigepad und einem Kommunikationsgerät.

20. PIN-Pad (3) nach Anspruch 19, bei der der Störungszustand eine Löschung des RAM verursacht.

21. PIN-Pad (3) nach Anspruch 19 oder 20, bei der der Fehlerzustand die Übertragung eines Alarmsignals zu einer zentralen Steuerstation bewirkt.

## Revendications

1. Module inviolable (2) pour carte à circuit imprimé (CCI) ayant une couche de connexion et une couche porteuse de composants, et destiné à être utilisé conjointement avec un dispositif de saisie actionné par l'utilisateur du type dans lequel la CCI est protégée par un blindage contre les attaques physiques externes et la CCI présente des connexions d'entrées et de sortie avec le dispositif d'utilisateur, le module (2) comprenant
des couches de protection (15) comportant une couche de support (16) de matière isolante montée contre une couche (13) de la CCI et portant sur la couche 16 à distance d'une couche (11, 13) de la CCI (10) une piste conductrice en serpentin (25) connectée à un circuit de détection sur la CCI où la rupture ou la mise à la masse de la piste (25) entraîne la signalisation d'une condition de panne, le module (2) comportant au moins une piste conductrice en serpentin supplémentaire (25) isolée de la première piste (25), **caractérisé en ce que**
les pistes (25) se croisent.

2. Module selon la revendication 1, dans lequel pour se croiser l'une l'autre une piste (25) est passée à travers la couche de support (16) de matière isolante à travers l'autre face de la couche de support (16) en dessous de l'autre piste (25) et ramenée vers le haut à travers la couche de support (16) formant ainsi des vias (26) à travers la carte.

3. Module (2) selon l'une quelconque des revendications précédentes, dans lequel la piste en serpentin (25) est connectée à travers la couche de support (16) à la face de connexion de la CCI par le biais d'une paire de vias (26) et dans lequel des vias factices supplémentaires (26) entre la piste en serpentin (25) et la couche de connexion (13) sont aussi aménagées.

4. Module (2) selon l'une quelconque des revendications précédentes, dans lequel les couches de protection (15) comprennent une couche supplémentaire de matière isolante (12) portant un blindage conducteur mis à la masse comme l'une de ses couches, sa couche d'isolation portant contre la piste conductrice en serpentin (25).

5. Module (2) selon la revendication 4, dans lequel le blindage conducteur comprend un agencement de type réseau de pistes croisées (20), la largeur des pistes (20) et les espacements (21) entre elles étant sensiblement égaux.

6. Module (2) selon l'une quelconque des revendications précédentes, dans lequel les couches de protection (15) sont montées sur les deux côtés de la CCI.

7. Module (2) selon l'une quelconque des revendications précédentes, dans lequel une piste de protection de bord conductrice (35) est menée sous forme de via (26) de haut en bas entre les deux couches (11, 13) de la CCI autour de sa périphérie et est connectée au circuit de détection.

8. Module (2) selon la revendication 7, dans lequel l'épaisseur de la piste de protection (35) et l'espacement entre des côtés adjacents de la piste (35) telle qu'elle est menée à travers la CCI sont sensiblement égaux.

9. Module (2) selon la revendication 7 ou 8, dans lequel il existe au moins une autre piste de protection de bord supplémentaire (35) à l'intérieur de l'autre piste (35) et décalée latéralement de celle-ci autour de la périphérie de la carte (10).

10. Module (2) selon l'une quelconque des revendications précédentes, dans lequel les épaisseurs de la piste sont de l'ordre de 100 µm.

11. Module (2) selon l'une quelconque des revendications précédentes, dans lequel des broches de connexion supplémentaires connectées à la masse sont disposées sur la périphérie de la CCI (10) et des couches de protection (15) pour fixer les couches (10, 15) ensemble.

12. Module (2) selon l'une quelconque des revendications précédentes, dans lequel des composants (12) montés sur la face porteuse de composants de la CCI sont noyés dans une résine époxy dure.

13. Module (2) selon la revendication 12, dans lequel la résine époxy est la HP4450 de Denter Hysol.

14. Module (2) selon l'une quelconque des revendications précédentes, dans lequel quand la CCI (10) est montée sur une couche (40) faisant partie du dispositif de saisie actionné par l'utilisateur, la couche a des connecteurs E/S (41, 42) sur l'une de ses faces pour la connexion à des connecteurs E/S correspondants (28, 31) sur la CCI (10) et dans lequel des couches de protection supplémentaires (15) sont montées contre la couche 40.

15. Module selon la revendication 14, dans lequel les connexions entre la CCI et la carte mère comprennent des connecteurs E/S externes disposés en périphérie (28) et des connecteurs E/S disposés intérieurement (31) sur la face de la couche porteuse de composants (11) de la CCI (10), les connecteurs (28, 31) formant de plus des montants de montage de la CCI sur la couche (40).

16. Module (12) selon la revendication 15, dans lequel les connecteurs E/S internes (31) sont des connecteurs pour les informations les plus confidentielles.

17. Module (2) selon l'une quelconque des revendications 14 à 16, dans lequel certains des connecteurs E/S (28, 31) sont connectés au circuit de détection.

18. Module (2) selon l'une quelconque des revendications 14 à 17, dans lequel les connecteurs E/S (28, 31) sont formés à partir de sphères d'une matière de soudure.

19. Clavier NIP (3) incorporant le module selon l'une quelconque des revendications précédentes, dans lequel le dispositif de saisie actionné par l'utilisateur comporte un panneau d'affichage et la CCI (10) comprend un module multipuce comportant une RAM contenant des applications dont la sécurité doit être préservée des attaques externes et une interface de communications entre le panneau d'affichage et un dispositif de communications.

20. Clavier NIP (3) selon la revendication 19, dans lequel la condition de panne entraîne l'effacement de la RAM.

21. Clavier NIP (3) selon la revendication 19 ou 20, dans lequel la condition de panne entraîne la transmission d'un signal d'alarme à un poste central de commande.
